# EUROPÄISCHE PATENTSCHRIFT

(11) **EP 3 280 905 B1**
(45) Veröffentlichungstag und Bekanntmachung des Hinweises auf die Patenterteilung: **19.05.2021**
(21) Anmeldenummer: 16725024.0
(22) Anmeldetag: 08.04.2016
(51) Int. Cl.: F02M 21/02, F16K 1/44, F02M 51/06, F02M 61/18, F16K 25/00, F16K 31/06

(54) **GASEINBLASVENTIL ZUM STEUERN EINES FLUIDSTROMS**
GAS INJECTION VALVE FOR CONTROLLING A FLUID FLOW
SOUPAPE D'INJECTION DE GAZ POUR CONTRÔLER UN FLUX DE FLUIDE

(30) Priorität: 10.04.2015 EP 15405028
(43) Veröffentlichungstag der Anmeldung: 14.02.2018
(73) Patentinhaber: Eugen Seitz AG, 8623 Wetzikon (CH)
(72) Erfinder: RAMSPERGER, Marcel, 8623 Wetzikon (CH); MORAWIETZ, Günter, 8610 Uster (CH)
(74) Vertreter: Clerc, Natalia
(86) Internationale Anmeldenummer: PCT/CH2016/000057
(87) Internationale Veröffentlichungsnummer: WO 2016/161529

(56) Entgegenhaltungen:
- EP-A1- 1 870 620
- EP-A1- 2 857 668
- AT-B- 412 227
- DE-A1- 10 319 920
- DE-A1-102013 202 599
- US-A1- 2011 168 931
- US-A1- 2012 115 060
- US-A1- 2013 082 126
- US-A1- 2014 224 903

## Beschreibung

Die Erfindung betrifft ein Gaseinblasventil zum Steuern eines Fluidstroms, das zumindest teilweise, vorzugsweise vollständig druckkompensiert ist.

Derartige Ventile werden u.a. als Gaseinblasventile dazu verwendet, das Einblasen eines unter einem ersten Druck stehenden Brennstoffgases in einen unter einem zweiten, niedrigeren Druck stehenden Luftstrom zu steuern, der zusammen mit dem eingeblasenen Brennstoffgas im Weiteren dem Brennraum einer Verbrennungskraftmaschine zugeführt wird. Um eine schnelle und präzise Kontrolle des Gasflusses zu ermöglichen, müssen solche Ventile sehr schnell zwischen einer Schliessstellung und einer Offenstellung geschaltet werden können. Dies kann zum einen durch einen schnellschaltenden Antrieb bzw. Aktuator erreicht werden. Zum anderen kann versucht werden, das Ventil so zu konstruieren, dass der Antrieb eine möglichst geringe Kraft aufbringen muss, um den Ventilverschluss gegen den auf ihn wirkenden Druck hin und her zu schalten. Hierzu sind aus dem Stand der Technik sogenannte druckausgeglichene bzw. zumindest teilweise druckkompensierte Ventile bekannt, bei denen der Ventilverschluss derart ausgelegt ist, dass zumindest in einer Ventilstellung - zumeist in der Schliessstellung - die Summe aller Kräfte, die von den Gasen beider Druckseiten auf den Ventilverschluss entlang seiner Bewegungsachse ausgeübt werden, ganz oder teilweise kompensiert sind. Bei bekannten druckkompensierten Ventilen kommen zu diesem Zweck in der Regel eine erste und eine zweite Dichtungsvorrichtung zum Einsatz, die den Ventilverschluss an zwei verschiedenen Stellen gegen das Ventilgehäuse abdichten.

So kann beispielsweise die erste Dichtungsvorrichtung eine Dichteinrichtung am Ventilgehäuse umfassen, der in der Schliessstellung mit einer korrespondierenden Gegendichteinrichtung des Ventilverschlusses in Dichtkontakt steht. Die zweite Dichtungsvorrichtung dichtet zusätzlich den Ventilverschluss gegen das Ventilgehäuse derart ab, dass der Raum im Innern des Ventilgehäuses in Schliessstellung des Ventils durch den Ventilverschluss und die zweite Dichtungsvorrichtung in zwei voneinander getrennte Kammern geteilt ist, wobei die jeweils in beiden Kammern vom Fluid auf den Ventilverschluss ausgeübten Kräfte, die in Richtung Schliessstellung wirken, durch jene Kräfte, die in Richtung Offenstellung wirken, gesamthaft oder zumindest teilweise gegenkompensiert werden.

Ein derartiges druckkompensiertes Ventil ist beispielsweise aus WO 2009/152414 bekannt. Bei diesem Ventil wird die zweite Dichtungsvorrichtung von einer flexiblen Membran gebildet, die zwischen dem Ventilverschluss und dem Ventilgehäuse gespannt ist. Eine Alternative für die zweite Dichtungsvorrichtung besteht in der Verwendung einer sogenannten dynamischen Dichtung, etwa eines O-Rings, der bei einer Bewegung des Ventilverschlusses an dem Ventilverschluss oder dem Ventilgehäuse gleitet. Derartige flexible Membranen bzw. dynamische Dichtungen haben jedoch den Nachteil, dass sie zum einen nur eine geringe Lebensdauer aufweisen und zum anderen die Herstellung des Ventils verkomplizieren.

Weiterhin ist aus der DE 10 2013 202 599 A1 ein magnetisch betätigbares Gaseinblasventil bekannt, das einen ersten und einen zweiten Ventilsitz aufweist. Die beiden Dichtbereiche/- sitze sind im Hinblick auf die beiden jeweiligen Dichtflächen durch einen in Betätigungsrichtung verlaufenden Absatz voneinander getrennt. Insbesondere offenbart dieses Dokument ein Dichtelement eines Ventils, insbesondere eines Gasventils, zum Steuern eines Mediums, umfassend einen Basiskörper mit einer Dichtfläche, wobei der Basiskörper einen ersten Dichtbereich und einen vom ersten Dichtbereich beabstandeten zweiten Dichtbereich aufweist, wobei eine erste Dicke des Dichtelements am ersten Dichtbereich unterschiedlich zu einer zweiten Dicke am zweiten Dichtbereich ist, und wobei der erste Dichtbereich vom zweiten Dichtbereich durch einen Absatz getrennt ist.

Die US 2014/0224903 A1 offenbart einen Kraftstoffinjektor, der ein Düsenelement mit einem Kraftstoffdurchgang, der zu einem Einspritzanschluss führt, aufweist. Ein Ventilhauptkörper ist angepasst, hin- und herzugehen, um den Kraftstoffdurchgang zu öffnen und zu schließen. Ein elastischer Abschnitt ist mittels einer Bewegung des Ventilhauptkörpers in einer Schließrichtung beim Schließen des Kraftstoffdurchgangs elastisch verformbar, wobei das elastische Element an dem Düsenelement oder dem Ventilhauptkörper angebracht ist und angepasst ist, gegen das andere von dem Düsenelement und dem Ventilhauptkörper anzuliegen, um den Kraftstoffdurchgang durch Bewegen des Ventilhauptkörpers in der Schließrichtung zu schließen. Ein Stopper ist angepasst, eine Bewegung des Ventilhauptkörpers 51 in der Schließrichtung zu beschränken, indem er gegen den Ventilhauptkörper angelegt wird, wobei der Stopper aus einem von dem Düsenelement verschiedenen Material ausgebildet ist. Aufgabe der Erfindung ist es daher, ein verbessertes, zumindest teilweise, vorzugsweise vollständig druckkompensiertes Ventil anzugeben, das ohne flexible Membranen oder dynamische Dichtungen auskommt und zugleich möglichst unabhängig von den einlass- und auslassseitig anliegenden Fluiddrücken eine zuverlässige und schnelle Steuerung eines Fluidstroms erlaubt.

Diese Aufgabe wird durch ein Gaseinblasventil gemäss Anspruch 1 gelöst. Vorteilhafte Ausgestaltungen der Erfindung sind Gegenstand der abhängigen Ansprüche.

Gemäss der Erfindung weist das Ventil ein Ventilgehäuse auf, in dem zum Öffnen und Schliessen einer Fluidverbindung zwischen einem Fluideinlass und einem Fluidauslass des Ventilgehäuses ein Verschlusselement mit einem Hülsenabschnitt entlang seiner Hülsenlängsachse mittels eines Aktuators zwischen einer Offenstellung und einer Schliessstellung verschiebbar ist.

Der Aktuator weist bezüglich des Ventilgehäuses zum einen ortsfeste und zum anderen bewegliche Teile auf, wobei letztere zum Verschieben des Verschlusselements an selbigem kraftschlüssig angreifen können. Gemäss der Erfindung ist es vorgesehen, dass zumindest die beweglichen Teile des Aktuators sowie das Verschlusselement vollständig innerhalb eines von dem Ventilgehäuse eingeschlossenen Fluidraums zwischen Fluideinlass und Fluidauslass angeordnet sind. Bei geöffneter Fluidverbindung bzw. in Offenstellung des Ventils sind somit sämtliche Oberflächen des Verschlusselements und der bewegten Teile in einem einzigen Fluidraum zwischen Fluideinlass und Fluidauslass angeordnet. Hierdurch wird der Einsatz dynamischer Dichtungen vermieden, die andernfalls notwendig wären, um die auf das Verschlusselement auszuübenden Aktuatorkräfte über eine etwaige dynamisch-mechanische Durchführungseinrichtung von ausserhalb des Ventilgehäuses in den Fluidraum innerhalb des Ventilgehäuses zu übertragen, etwa durch eine Kolbenstange, die dynamisch abgedichtet durch das Ventilgehäuse geführt ist. Sofern die ortsfesten Teile ausserhalb des Fluidraums angeordnet sind, eignen sich in besonderer Weise elektromagnetische Aktuatoren, die es erlauben, die auszuübenden Aktuatorkräfte über ein Magnetfeld medienungebunden von ausserhalb des Ventilgehäuses in den Fluidraum innerhalb des Ventilgehäuses zu übertragen. Denkbar ist aber auch, dass die ortsfesten Teile ebenfalls vollständig innerhalb des Fluidraums zwischen Fluideinlass und Fluidauslass angeordnet sind. Die Formulierungen "ortsfeste Teile" und "bewegliche Teile" des Aktuators umfassen gemäss der vorliegenden Erfindung auch Ausgestaltungsformen, bei denen die "ortsfesten Teile" und/oder die "beweglichen Teile" unter Umständen jeweils auch nur ein Bauteil aufweisen oder aus einem Bauteil bestehen.

Der Hülsenabschnitt bedingt in vorteilhafter Weise einerseits eine reduzierte bewegte Masse und andererseits einen geringen Fluidwiderstand, was sich beides positiv auf die Schaltzeiten des Ventils auswirkt. Bevorzugt ist der Hülsenabschnitt im Wesentlichen hohlzylinderförmig bzw. im Querschnitt rund ausgebildet. Denkbar sind aber auch andere Querschnittsformen, etwa ein rechteckiger, quadratischer oder mehreckiger Querschnitt.

Gemäss der Erfindung ist es vorgesehen, dass das Ventil wenigstens einen Doppeldichtsitz aufweist, der am Hülsenabschnitt eine erste und eine dazu entlang der Hülsenlängsachse beabstandete zweite Dichteinrichtung sowie am Ventilgehäuse eine erste und eine entsprechend gleich beabstandete zweite Gegendichteinrichtung aufweist, wobei zum Schliessen der Fluidverbindung die erste Dichteinrichtung mit der ersten Gegendichteinrichtung entlang einer ersten geschlossenen Dichtlinie und die zweite Dichteinrichtung mit der zweiten Gegendichteinrichtung entlang einer zweiten geschlossenen Dichtlinie in Dichtkontakt stehen. Bei geschlossener Fluidverbindung, d.h. in Schliessstellung des Ventils, unterteilen somit die erste und zweite Dichtlinie den Fluidraum jeweils in unmittelbar mit dem Fluideinlass und unmittelbar mit dem Fluidauslass verbundene Teilfluidräume, so dass an beiden Dichtlinien jeweils auf einer Seite des entsprechenden Dichtkontakts eine unmittelbare Fluidverbindung zum Fluideinlass und auf der anderen Seite des entsprechenden Dichtkontakts eine unmittelbare Fluidverbindung zum Fluidauslass bestehen. Aufgrund des gleichen axialen Abstands zwischen der ersten und zweiten Dichteinrichtung bzw. ersten und zweiten Gegendichteinrichtung treten die erste und die zweite Dichteinrichtung mit der ersten bzw. zweiten Gegendichteinrichtung gleichzeitig in Kontakt, so dass nach dem In-Kontrakttreten bis hin zur und in der End-Schliessstellung jeweils dieselben Dicht-/Anpressdrücke bzw. Dichtdruck-/Anpressdruckverhältnisse am ersten und zweiten Dicht-/Gegendichteinrichtungspaar bzw. erstem und zweiten Dichtsitzpaar vorliegen.

Dabei ist der Begriff "Dichtlinie" im technischen Sinne so zu verstehen, dass die Dichtlinie auch eine gewisse endliche Breite aufweisen kann, so dass die Dichteinrichtung und die korrespondierende Gegendichteinrichtung je nach Ausgestaltung auch flächig miteinander in Dichtkontakt stehen können. Durch das Vorsehen der beiden Dicht- und Gegendichteinrichtungen sind die für eine zumindest teilweise Druckkompensation bzw. für einen vollständigen Druckausgleich erforderlichen wenigstens zwei Dichtungsvorrichtungen realisiert, wobei jedoch keine der erfindungsgemässen Dichtungsvorrichtungen eine dynamische Dichtung ist.

Der bezüglich der Hülsenlängsachse (gleiche) axiale Abstand zwischen der ersten und zweiten Dicht- bzw. Gegendichteinrichtung erlaubt in vorteilhafter Weise, dass das Ventil nahezu oder sogar vollständig druckausgeglichen werden kann, wofür es notwendig ist, dass die erste und zweite Dichtlinie in einer Projektion entlang der Bewegungsrichtung nahezu oder sogar vollständig deckungsgleich übereinander angeordnet sind. In diesem Fall ist die druckwirksame Effektivfläche, auf die bei geschlossenem Ventil eine etwaige Druckdifferenz zwischen Fluideinlass und Fluidauslass eine effektive Nettokraft in Richtung Schliessstellung oder Offenstellung ausüben könnte, sehr klein oder sogar Null. Bei Anordnung des Verschlusselements und zumindest aller bewegten Teile des Aktuators innerhalb des Fluidraums - wie erfindungsgemäss vorgesehen - entspricht die druckwirksame Effektivfläche der Differenz zwischen einerseits einer ersten Fläche, die in Projektion entlang der Hülsenlängsachse von der ersten Dichtlinie eingeschlossen ist, und andererseits einer zweiten Fläche, die in Projektion entlang der Hülsenlängsachse von der zweiten Dichtlinie eingeschlossen ist. Alternativ betrachtet entspricht die druckwirksame Effektivfläche bei geschlossenem Ventil der fluideinlassseitig effektiv in Richtung Schliessstellung druckwirksamen Flächenkomponenten des Verschlusselements und der bewegten Teile des Aktuators abzüglich der effektiv in Richtung Offenstellung druckwirksamen Flächenkomponenten des Verschlusselements und der bewegten Teile des Aktuators. Bei Anordnung des Verschlusselements und zumindest aller bewegten Teile des Aktuators innerhalb des Fluidraums - wie erfindungsgemäss vorgesehen - gilt das gleiche auch auf der Fluidauslassseite. Dabei sind mit den "in Richtung Schliessstellung bzw. in Richtung Offenstellung druckwirksamen Flächenkomponenten" alle jene druckbeaufschlagbaren Oberflächen des Verschlusselements bzw. der bewegten Teile des Aktuators gemeint, die eine Flächenkomponente in Richtung Schliessstellung bzw. Offenstellung aufweisen.

Gemäss der Erfindung ist es im Sinne einer zumindest teilweisen oder sogar vollständigen Druckausgeglichenheit vorgesehen, dass bezüglich des wenigstens einen Doppeldichtsitzes das Verhältnis der ersten Fläche, die in Projektion entlang der Hülsenlängsachse von der ersten Dichtlinie eingeschlossen ist, zu der zweiten Fläche, die in Projektion entlang der Hülsenlängsachse von der zweiten Dichtlinie eingeschlossen ist, zwischen 6/10 und 10/6 liegt. Ein Verhältnis in diesem Bereich bewirkt in vorteilhafter Weise, dass das Schalten des Ventils hinreichend schnell und präzise erfolgen kann.

Gemäss einer vorteilhaften Ausgestaltung der Erfindung ist es vorgesehen, dass das Ventil zwei, insbesondere drei, insbesondere vier, insbesondere fünf Doppeldichtsitze aufweist, die jeweils am Hülsenabschnitt eine erste und eine dazu entlang der Hülsenlängsachse beabstandete zweite Dichteinrichtung sowie am Ventilgehäuse eine erste und eine entsprechend beabstandete zweite Gegendichteinrichtung aufweisen. Durch das Vorhandensein mehrerer Doppeldichtsitze wird die Durchström-Querschnittsfläche bei gleichem Ventilhub in vorteilhafter Weise vergrössert.

Gemäss einer weiteren vorteilhaften Ausgestaltung der Erfindung ist es vorgesehen, dass bezüglich des wenigstens einen Doppeldichtsitzes bzw. eines jeden Doppeldichtsitzes das Verhältnis der jeweils ersten Fläche zu der jeweils zweiten Fläche zwischen 65/100 und 100/65, insbesondere zwischen 7/10 und 10/7, insbesondere zwischen 75/100 und 100/75, insbesondere zwischen 8/10 und 10/8 insbesondere zwischen 85/100 und 100/85, insbesondere zwischen 9/10 und 10/9, insbesondere zwischen 95/100 und 100/95 liegt, bevorzugt gleich 1 ist. Hierdurch lassen sich die Schaltzeiten noch weiter verbessern und die schaltzeitabhängig von einlass- und auslassseitig anliegenden Fluiddrücken weiter minimieren. Vollständige Druckausgeglichenheit liegt vor, wenn die erste und zweite Fläche gleich gross sind, insbesondere in axialer Richtung bzw. in Richtung der Hülsenlängsachse deckungsgleich übereinander liegen.

Bei vielen Anwendungen kann eine mitunter zumindest nur teilweise bis fast vollständige, jedoch nicht gänzliche Druckausgeglichenheit ausreichend sein, so dass es gemäss einer weiteren vorteilhaften Ausgestaltung der Erfindung vorgesehen sein kann, dass bezüglich des wenigstens einen Doppeldichtsitzes bzw. eines jeden Doppeldichtsitzes das Verhältnis der jeweils ersten Fläche zu der jeweils zweiten Fläche zwischen 6/10 und 99/100 oder zwischen 100/99 und 10/6, insbesondere zwischen 6/10 und 98/100 oder zwischen 100/98 und 10/6, insbesondere zwischen 6/10 und 97/100 oder zwischen 100/97 und 10/6, insbesondere zwischen 6/10 und 96/100 oder zwischen 100/96 und 10/6, insbesondere zwischen 6/10 und 95/100 oder zwischen 100/95 und 10/6, insbesondere zwischen 6/10 und 94/100 oder zwischen 100/94 und 10/6, insbesondere zwischen 6/10 und 93/100 oder zwischen 100/93 und 10/6, insbesondere zwischen 6/10 und 92/100 oder zwischen 100/92 und 10/6, insbesondere zwischen 6/10 und 91/100 oder zwischen 100/91 und 10/6, insbesondere zwischen 6/10 und 9/10 oder zwischen 10/9 und 10/6, insbesondere zwischen 6/10 und 89/100 oder zwischen 100/89 und 10/6, insbesondere zwischen 6/10 und 88/100 oder zwischen 100/88 und 10/6, insbesondere zwischen 6/10 und 87/100 oder zwischen 100/87 und 10/6, insbesondere zwischen 6/10 und 85/100 oder zwischen 100/85 und 10/6 liegt. Denkbar ist auch, dass bei jedem der zuvor angegebenen Intervallen an die Stelle der Untergrenze von 6/10 bzw. der Obergrenze von 10/6 eine der folgenden Untergrenzen bzw. Obergrenzen tritt: 65/100 bzw. 100/65 oder 7/10 bzw. 10/7 oder 75/100 bzw. 100/75 oder 8/10 bzw. 10/8.

Um die Schaltcharakteristik des Ventils weiter zu verbessern, kann es nach einer vorteilhaften Ausgestaltung der Erfindung vorgesehen sein, dass bezüglich des wenigstens einen Doppeldichtsitzes bzw. bezüglich jeweils jeden Doppeldichtsitzes das Verhältnis des kleinsten Abstands der ersten oder zweiten Dichteinrichtung zur Hülsenlängsachse und andererseits zu dem axialen Abstand zwischen erster und zweiter Dichteinrichtung wenigstens 1, insbesondere wenigstens 1,25, insbesondere wenigstens 1,5, insbesondere wenigstens 1,75, insbesondere wenigstens 2, insbesondere wenigstens 2,25, insbesondere wenigstens 2, 5, insbesondere wenigstens 2,75, insbesondere wenigstens 3, insbesondere wenigstens 3,25, insbesondere wenigstens 3,5, insbesondere wenigstens 3,75, insbesondere wenigstens 4, insbesondere wenigstens 4, 5, insbesondere wenigstens 5, insbesondere wenigstens 6, bevorzugt wenigstens 7 beträgt. Zum einen vergrössert sich mit zunehmendem Abstand der Dichteinrichtungen zur Hülsenlängsachse der Umfang der Dichtlinie und damit die Durchström-Querschnittsfläche bei gleichem Ventilhub, wodurch sich umgekehrt bei vorgegebener Durchström-Querschnittsfläche der Ventilhub reduzieren lässt. Zum anderen reduziert sich die Länge und damit die Masse des Verschlusselements mit abnehmendem axialen Abstand zwischen erster und zweiter Dichteinrichtung.

Vorzugsweise führt die geöffnete Fluidverbindung zwischen Fluideinlass und Fluidauslass bezüglich des wenigstens einen Doppeldichtsitzes bzw. bezüglich jeweils jeden Doppeldichtsitzes zumindest im Bereich zwischen jeweils erster und zweiter Dichteinrichtung über eine Innen- und eine Aussenseite des Hülsenabschnitts. Weiterhin kann es vorgesehen sein, dass das Fluid beim Öffnen des Ventils über beide Passagen strömt, die sich zwischen erster bzw. zweiter Dicht- und Gegendichteinrichtung öffnen, so dass sich in vorteilhafter Weise bereits bei halbem Hub die gleiche Durchström-Querschnittsfläche öffnet wie bei entsprechenden einsitzigen Ventilen, was sich positiv auf die Schaltzeiten auswirkt.

Weiterhin ist denkbar, dass
- die erste und/oder zweite Dichteinrichtung des wenigstens einen Doppeldichtsitzes an einem umfangsseitig umlaufenden Fortsatz auf der Aussenseite des Hülsenabschnitts angeordnet ist, oder
- die erste und/oder zweite Dichteinrichtung des wenigstens einen Doppeldichtsitzes an einem umfangsseitig umlaufenden Fortsatz auf der Innenseite des Hülsenabschnitts angeordnet ist, oder
- eine der Dichteinrichtungen des wenigstens einen Doppeldichtsitzes an einem umfangsseitig umlaufenden Fortsatz auf der Aussenseite oder Innenseite des Hülsenabschnitts und die andere Dichteinrichtung des wenigstens einen Doppeldichtsitzes an einer Stirnseite des Hülsenabschnitts angeordnet ist, oder
- eine der Dichteinrichtungen des wenigstens einen Doppeldichtsitzes an einem umfangsseitig umlaufenden Fortsatz auf der Innenseite des Hülsenabschnitts und die andere Dichteinrichtung des wenigstens einen Doppeldichtsitzes an einem umfangsseitig umlaufenden Fortsatz auf der Aussenseite des Hülsenabschnitts angeordnet ist.

Insbesondere dann, wenn beide Dichteinrichtungen des wenigstens einen Doppeldichtsitzes auf einem umlaufenden Fortsatz auf der Aussenseite oder alternativ auf der Innenseite angeordnet sind, können sie in Richtung der Hülsenlängsachse deckungsgleich übereinander liegend angeordnet sein, um eine vollständige Druckausgeglichenheit zu erreichen.

Für den Fall, dass die beiden Dichtlinien des wenigstens einen Doppeldichtsitzes in einer Projektion entlang der Hülsenlängsachse deckungsgleich übereinander liegen oder sich in der Projektion zumindest schneiden, kann es gemäss einer weiteren vorteilhaften Ausgestaltung der Erfindung vorgesehen sein, dass zum einfachen Montieren eines entsprechend ausgebildeten Verschlusselements im Ventilgehäuse das Verschlusselement, bevorzugt im Bereich des Hülsenabschnitts, mehrteilig, insbesondere zweiteilig ausgebildet ist. Dabei sind bevorzugt die erste und zweite Dichteinrichtung jeweils an unterschiedlichen Teilen des mehrteiligen Verschlusselements bzw. des Hülsenabschnitts angeordnet. Alternativ oder zusätzlich kann aber auch das Ventilgehäuse mehrteilig, insbesondere zweiteilig ausgebildet sein, wobei bevorzugt die erste und zweite Gegendichteinrichtung jeweils an unterschiedlichen Teilen des mehrteiligen Ventilgehäuses angeordnet sind. Denkbar ist auch, dass das Ventilgehäuse wenigstens eine dichtend verschliessbare Montageöffnung aufweist.

Umgekehrt kann es aber bei einem im Sinne dieser Erfindung nur teilweise druckausgeglichenen Ventils, bei dem die beiden Dichtlinien des wenigstens einen Doppeldichtsitzes in einer Projektion entlang der Hülsenlängsachse nicht deckungsgleich übereinander liegen und sich in der Projektion entlang der Hülsenlängsachse nicht schneiden, vorgesehen sein, dass das Ventilgehäuse zumindest in jenem Bereich, an dem die erste und zweite Gegendichteinrichtung angeordnet sind, oder das Verschlusselement zumindest im Bereich des Hülsenabschnitts, an dem die erste und zweite Dichteinrichtung des wenigstens einen Doppeldichtsitzes angeordnet sind, einstückig ausgebildet ist. Hierdurch kann ein sehr passgenauer axialer Abstand zwischen erster und zweiter Dicht- bzw. Gegendichteinrichtung gewährleistet werden, der innerhalb der für einen hinreichenden Dichtkontakt in Schliessstellung notwendigen Toleranzgrenzen liegt.

Nach einer weiteren Ausgestaltung der Erfindung kann das Verschlusselement axial angrenzend an den Hülsenabschnitt einen weiteren Hülsenabschnitt aufweisen, der vorzugsweise wenigstens eine umfangsseitige Durchgangsöffnung aufweist, über die die Innenseite und die Aussenseite des weiteren Hülsenabschnitts in Fluidverbindung stehen. Über eine derartige Durchgangsöffnung kann u.a. erreicht werden, dass in der Offenstellung die Fluidverbindung zwischen Fluideinlass und Fluidauslass zumindest im Bereich zwischen erster und zweiter Dichteinrichtung sowohl über die Innenseite als auch über die Aussenseite des Verschlusselements führt. Denkbar ist auch, dass das Verschlusselement insgesamt als Hülse ausgebildet ist, bevorzugt im Wesentlichen hohlzylinderförmig bzw. im Querschnitt rund. Denkbar sind aber auch andere Querschnittsformen, etwa ein rechteckiger, quadratischer oder mehreckiger Querschnitt.

Zudem kann es vorgesehen sein, dass der Hülsenabschnitt zwischen jeweils benachbarten Doppeldichtsitzen wenigstens eine umfangsseitige Durchgangsöffnung aufweist, über die die Innenseite und die Aussenseite des Hülsenabschnitts in Fluidverbindung stehen.

Der Aktuator ist gemäss einer vorteilhaften Ausgestaltung der Erfindung als elektromagnetischer Reluktanzaktuator ausgebildet, der eine Magnetfeldspule, einen magnetisch leitenden Körper mit Luftspalt, etwa einem Weicheisenkörper mit Luftspalt, und einen Anker aufweist. Alternativ kann der Aktuator auch als elektromagnetischer Tauchspulen-Aktuator mit einer Magnetfeldspule und einem Permanentmagneten ausgebildet sein. Derartige elektromagnetische Aktuatoren erlauben in besonders einfacher Weise, die auf das Verschlusselement auszuübenden Aktuatorkräfte ohne den Einsatz einer dynamischmechanischen Durchführungseinrichtung und den Einsatz etwaiger dynamischer Dichtungen von ausserhalb des Ventilgehäuses in den Fluidraum innerhalb des Ventilgehäuses zu übertragen, so dass es möglich ist, nur den bewegten Teil des Aktuators im Fluidraum anzuordnen.

Insoweit kann es bei einer vorteilhaften Ausgestaltung der Erfindung vorgesehen sein, dass bei einer Ausbildung des Aktuators als Reluktanzaktuator der Anker das bewegte Teil ist und entsprechend mit dem Verschlusselement verbunden ist, insbesondere mit dem Verschlusselement einteilig ausgebildet ist. Denkbar ist zudem, dass der Anker bezüglich der Magnetfeldspule und des Körpers entweder radial innen oder radial aussen angeordnet ist.

Entsprechend kann es bei einer Ausbildung des Aktuators als Tauchspulen-Aktuator vorgesehen sein, dass entweder die Magnetfeldspule als bewegtes Aktuatorteil mit dem Verschlusselement verbunden ist, insbesondere auf einen Abschnitt des Verschlusselements aufgewickelt ist.

Zudem können bei einer weiteren Ausgestaltung der Erfindung sowohl das bewegte als auch das ortsfeste Teil des Aktuators innerhalb des Fluidraums angeordnet sein. Entsprechend ist es bei einer weiteren Ausführungsform vorgesehen, dass bei einer Ausbildung als Reluktanzaktuator die Magnetfeldspule, der magnetisch leitende Körper und der Anker innerhalb des Fluidraums angeordnet sind und dass bei einer Ausbildung als Tauchspulen-Aktuator die Magnetfeldspule und der Permanentmagnet innerhalb des Fluidraums angeordnet sind.

Um ein besonders platzsparendes Ventil zu realisieren, kann die Fluidverbindung zwischen Fluideinlass oder Fluidauslass in vorteilhafter Weise durch das Zentrum der Magnetfeldspule des Reluktanzaktuators oder des Tauchspulen-Aktuators entlang der Spulenachse führen.

Bei weiteren Ausführungsformen der Erfindung kann es vorgesehen sein, dass der Fluideinlass bezüglich der Hülsenlängsachse axial oder radial in das Ventilgehäuse weist und/oder dass der Fluidauslass bezüglich der Hülsenlängsachse axial oder radial aus dem Ventilgehäuse weist. Insbesondere eine Axial-Axial-Anordnung, bei der sowohl der Fluideinlass als auch der Fluidauslass bezüglich der Hülsenlängsachse axial in bzw. aus dem Ventilgehäuse weisen, zeichnet sich durch eine besonders strömungsgünstige Fluidführung aus.

Gemäss einer weiteren Ausgestaltung der Erfindung können die erste und/oder zweite Dichteinrichtung des wenigstens einen Doppeldichtsitzes und/oder die erste und/oder zweite Gegendichteinrichtung des wenigstens einen Doppeldichtsitzes Dichtungen, etwa Dichtringe, aufweisen. Diese können beispielsweise aus einem elastischen Material, etwa einem Elastomer hergestellt sein.

Zum Schutz der ersten und zweiten Dicht- und Gegendichteinrichtungen des wenigstens einen Doppeldichtsitzes, insbesondere der Dichtungen, wenn diese in Schliessstellung miteinander in Dichtkontakt gelangen, kann es zudem vorgesehen sein, dass das Ventil, vorzugsweise das Verschlusselement bzw. alternativ oder zusätzlich das Ventilgehäuse, wenigstens einen mechanischen Endanschlag aufweist. Die Dichtungen können zudem in vorteilhafter Weise durch Anordnen in einer Nut oder nutenartigen Vertiefung geschützt werden, aus der die Dichtung nur teilweise übersteht. Hierdurch wird verhindert, dass die gesamte kinetische Energie des Verschlusselements beim In-Dichtkontakt-Gelangen von Gegendichteinrichtung und Dichteinrichtung vollständig von den Dicht- und Gegendichteinrichtungen, insbesondere von der Dichtung aufgenommen werden muss. Vielmehr wird der grösste Teil der Energie vom mechanischen Endanschlag aufgenommen, so dass eine lange Lebensdauer der Dicht- und Gegendichteinrichtungen, insbesondere der Dichtung gewährleistet werden kann.

Nach einer weiteren vorteilhaften Ausgestaltung der Erfindung weist die Dichtung eine Dichtlippe auf, die bevorzugt in Strömungsrichtung der Fluidverbindung zwischen Fluideinlass und Fluidauslass ausgerichtet ist. Insbesondere sind die Dichtlippen der Dichtungen an der ersten Dicht- bzw. Gegendichteinrichtung des wenigstens einen Doppeldichtsitzes und die Dichtlippen der Dichtungen an der zweiten Dicht- bzw. Gegendichteinrichtung des wenigstens einen Doppeldichtsitzes einander zugewandt ausgerichtet. Hierdurch kann erreicht werden, dass die erste und zweite Dichtlinie in der Projektion entlang der Hülsenlängsachse in radialer Richtung noch näher zusammenliegen, so dass die druckwirksame Effektivfläche zusätzlich reduziert ist.

Neben der Verwendung als Gaseinblasventil bei Verbrennungsmotoren ist das zuvor beschriebene erfindungsgemässe Ventil universell auch für andere Steuervorgänge eines Fluidstroms aus gasförmigen und/oder flüssigen Medien geeignet, bei denen zum einen die Schaltcharakteristik möglichst unabhängig von etwaig grossen Druckdifferenzen zwischen Ein- und Auslass sein soll und zum anderen hohe Lebensdauern zu gewährleisten sind. Andere Anwendungsbereiche betreffen zum Beispiel die Vorkammer-Gasdosierung bei Gasmotoren für Blockheizkraftwerke oder für Schiffe. Denkbar ist auch die Verwendung als Streckblasventil, etwa für die Herstellung von PET-(Polyethylenterephthalat-) Flaschen.

Weitere Ziele, Vorteile und Anwendungsmöglichkeiten der vorliegenden Erfindung ergeben sich aus der nachfolgenden Beschreibung eines Ausführungsbeispiels anhand der Zeichnungen.

Es zeigen:
- Fig. 1: Querschnitt durch ein Ausführungsbeispiel eines erfindungsgemässen Ventils entlang einer ersten Schnittebene,
- Fig. 2: Querschnitt durch das Ventil gemäss Fig. 1 entlang einer zweiten Schnittebene,
- Fig. 3: Detailansicht Y gemäss Fig. 2,
- Fig. 4: Detailansicht X gemäss Fig. 2, und
- Fig. 5: Detailquerschnitt durch ein weiteres Ausführungsbeispiel eines erfindungsgemässen Ventils.

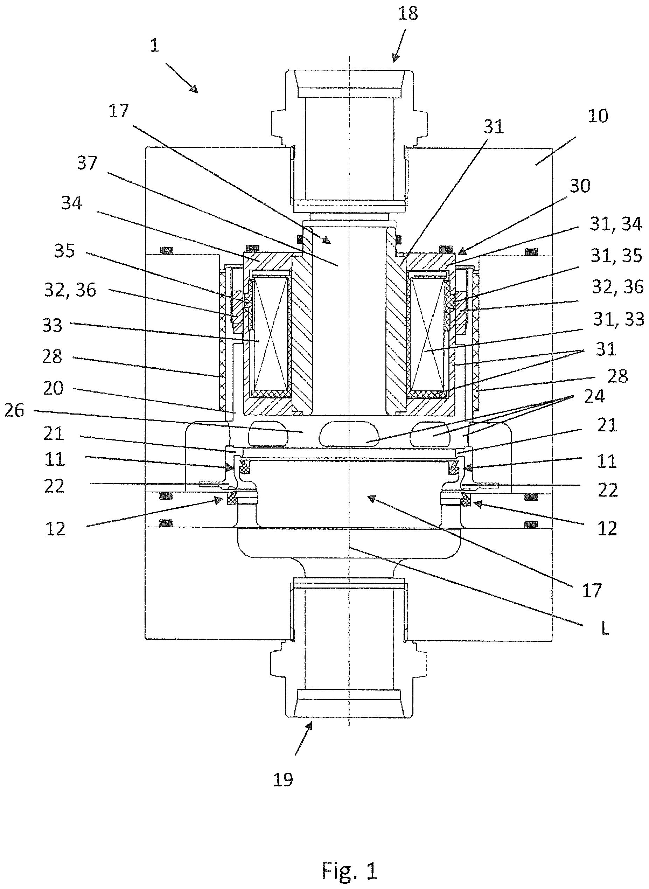

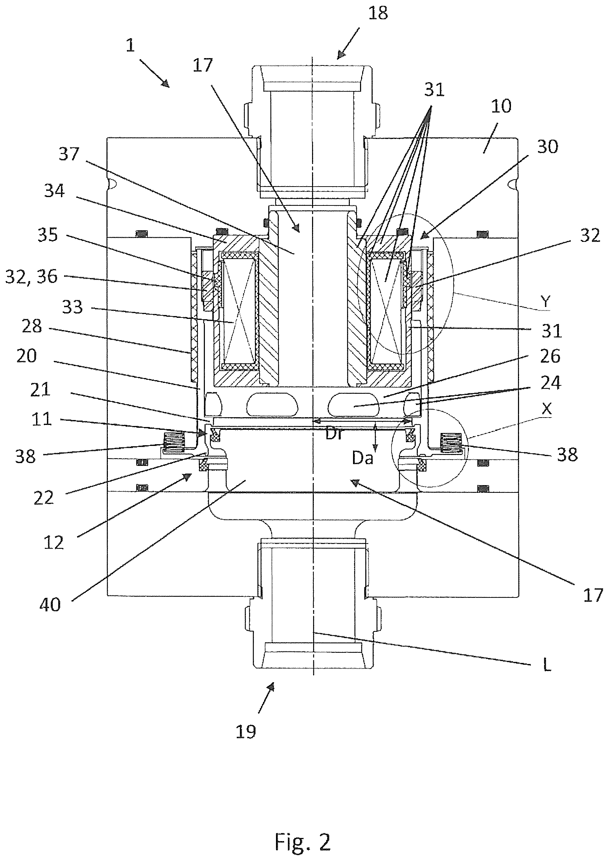

Die Fig. 1 bis 4 zeigen ein mögliches Ausführungsbeispiel eines erfindungsgemässen Ventils 1. Das Ventil 1 weist ein Ventilgehäuse 10 auf, in dem zum Öffnen und Schliessen einer Fluidverbindung zwischen einem Fluideinlass 18 und einem Fluidauslass 19 des Ventilgehäuses 10 ein im Wesentlichen hohlzylinderförmiges Verschlusselement 20 mit einem Hülsenabschnitt 23 und einem weiteren Hülsenabschnitt 26 entlang der Hülsenlängsachse L an Gleitlagern 28 verschiebbar angeordnet ist. Zum Verschieben des Verschlusselements 20 zwischen der Offenstellung und der Schliessstellung des Ventils 1 dient ein Aktuator 30, der das Verschlusselement 20 gegen die Kraft von mehreren umfangsseitig verteilten Rückstellfedern 38 in die Schliessstellung bewegt. Die Fig. 1 bis 4 zeigen das Ventil 1 in der Offenstellung.

Der Aktuator 30 ist im vorliegenden Ausführungsbeispiel als elektromagnetischer Reluktanzaktuator ausgebildet, der eine Magnetfeldspule 33, einen magnetisch leitenden Körper 34 mit Luftspalt 35 sowie einen magnetisch leitenden Anker 36 aufweist. Dabei sind die Magnetfeldspule 33 und der magnetisch leitende Körper 34 mit Luftspalt 35 bezüglich des Ventilgehäuses 10 als ortsfeste Teile 31 ausgebildet, wohingegen der Anker 36 als bewegliches Teil 32 fest mit dem verschiebbaren Verschlusselement 20 verbunden ist.

Sowohl das Verschlusselement 20 und der damit verbundene Anker 36 als auch die Magnetfeldspule 33 und der magnetisch leitende Körper 34 mit Luftspalt 35 sind vollständig innerhalb eines von dem Ventilgehäuse 10 eingeschlossenen Fluidraums 17 zwischen Fluideinlass 18 und Fluidauslass 19 angeordnet. Damit sind wenigstens sämtliche beweglichen Teile, d.h. die beweglichen Teile 32 des Aktuators 30 und das Verschlusselement 20 innerhalb des Fluidraums 17 eingeschlossen, so dass dynamische Dichtungen und die damit verbundenen Nachteile vermieden werden. Das Verschlusselement 20 und der Anker 36 sind im vorliegenden Ausführungsbeispiel bezüglich der Magnetfeldspule 33 und des Körpers 34 radial aussen ausgeordnet und umfassen die Magnetfeldspule 33 und den Körper 34.

Das Ventil gemäss Fig. 1 bis 4 weist einen Doppeldichtsitz auf, der am Hülsenabschnitt 23 eine erste Dichteinrichtung 21 und eine dazu entlang der Hülsenlängsachse L beabstandete zweite Dichteinrichtung 22 sowie am Ventilgehäuse 10 eine erste und eine entsprechend beabstandete zweite Gegendichteinrichtung 11, 12 aufweist. Dabei stehen zum Schliessen der Fluidverbindung die erste Dichteinrichtung 21 mit der ersten Gegendichteinrichtung 11 entlang einer ersten geschlossenen Dichtlinie und die zweite Dichteinrichtung 22 mit der zweiten Gegendichteinrichtung 12 entlang einer zweiten geschlossenen Dichtlinie derart in Dichtkontakt, dass die erste und zweite Dichtlinie den Fluidraum 17 jeweils in unmittelbar mit dem Fluideinlass 18 und unmittelbar mit dem Fluidauslass 19 verbundene Teilfluidräume unterteilt, d.h. dass auf einer Seite des jeweiligen Dichtkontakts eine Fluidverbindung zum Fluideinlass 18 und auf der anderen Seite des jeweiligen Dichtkontakts eine Fluidverbindung zum Fluidauslass 19 besteht.

Um die Vorteile des Doppeldichtsitzes auszunutzen, d.h. bei halbem Hub die gleiche Durchström-Querschnittsfläche zu öffnen wie bei einem entsprechenden einsitzigen Ventil, führt in der Offenstellung die Fluidverbindung zumindest im Bereich des Hülsenabschnitts 23 zwischen erster und zweiter Dichteinrichtung 21, 22 sowohl über die Innenseite als auch über die Aussenseite des Verschlusselements 20 bzw. des Hülsenabschnitts 23. Hierzu weist der weitere Hülsenabschnitt 26 des Verschlusselements 20 mehrere umfangsseitige Durchgangsöffnungen 24 auf, über die die Innenseite und die Aussenseite des Verschlusselements 20 in Fluidverbindung stehen. Wie insbesondere in Fig.1 zu erkennen ist, weist das Ventilgehäuse 10 an der Innenseite im Bereich zwischen erster und zweiter Gegendichteinrichtung 11, 12 Ausbuchtungen auf, in denen das Fluid aus den Durchgangsöffnungen 24 an der Aussenseite des Verschlusselements 20 in Richtung zweiter Dichteinrichtung 22 strömen kann.

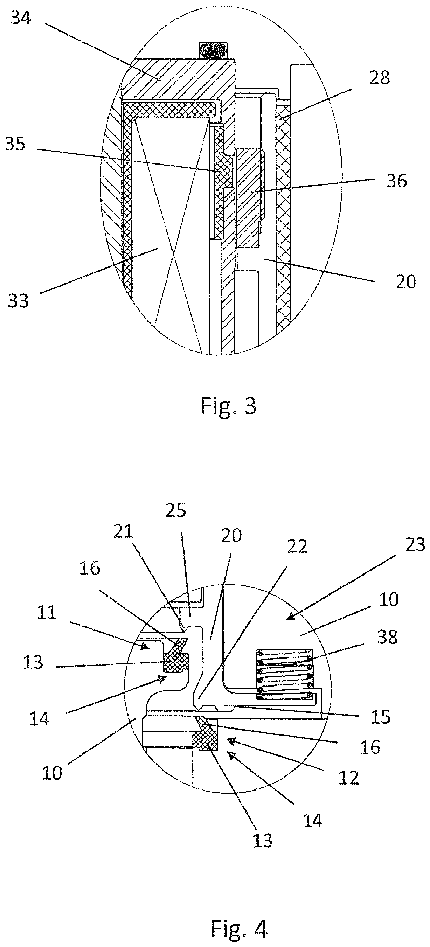

Wie insbesondere in Fig. 4 zu erkennen ist, ist die erste Dichteinrichtung 21 an einem umlaufenden Fortsatz 25 auf der Innenseite des Hülsenabschnitts 23 ausgebildet, wohingegen die zweite Dichteinrichtung 22 an der fluidauslassseitigen Stirnseite des Hülsenabschnitts 23 angeordnet ist. Zusätzlich weist der Hülsenabschnitt 23 an seiner fluidauslassseitigen Stirnseite einen umfangsseitig umlaufenden radial nach aussen weisenden Fortsatz auf, an dem sich die Rückstellfedern 38 zwischen dem Ventilgehäuse 10 und dem Verschlusselement 20 abstützen. Insbesondere ist das Verschlusselement 20 samt Fortsätzen und Dichteinrichtungen 21, 22 einteilig ausgebildet, wodurch das Ventil 1 sehr toleranzarm wird. Die korrespondierende zweite Gegendichteinrichtung 12 ist an der Innenwand des Ventilgehäuses 10 angeordnet, während die korrespondierende erste Gegendichteinrichtung 11 an einem fluidauslassseitigen Innenteil 40 angeordnet ist, das Teil des Ventilgehäuses 10 bildet und nach aussen gegen die Innenwand des Ventilgehäuses 10 abgestützt ist.

Die erste und zweite Dichteinrichtung 21, 22 weisen im vorliegenden Ausführungsbeispiel im Wesentlichen schneidenartige Dichtkanten auf, wohingegen die erste und zweite Gegendichteinrichtung 11, 12 jeweils eine umlaufende Dichtung 13 mit Dichtlippen 16 aufweist, die in Schliessstellung mit den schneidenartigen Dichtkanten der ersten und zweiten Dichteinrichtung 21, 22 in Dichtkontakt gelangen. Zum Schutz der Dichtungen 13 sind diese in Nuten bzw. nutenartigen Vertiefungen 14 an der ersten und zweiten Gegendichteinrichtung 11, 12 angeordnet, über die die Dichtlippen 16 in Richtung Offenstellung teilweise hinausragen. Zudem weist das Verschlusselement 20 einen mechanischen Endanschlag 15 auf. Insgesamt wird hierdurch verhindert, dass die gesamte kinetische Energie des Verschlusselements 20 beim In-Dichtkontakt-Gelangen von Dicht- und Gegendichteinrichtung 21, 22, 11, 12 vollständig von den Dichtungen 13 aufgenommen werden muss. Vielmehr wird der grösste Teil der Energie vom mechanischen Endanschlag 15 aufgenommen, so dass eine lange Lebensdauer der Dichtungen 13 gewährleistet werden kann.

Da das Verschlusselement 20 im vorliegenden Ausführungsbeispiel im Wesentlichen hohlzylindrisch ausgebildet ist, sind die erste und zweite Dichtlinie jeweils geschlossene Kreislinien, entlang derer die erste bzw. zweite Dichteinrichtung 21, 22 mit der ersten bzw. zweiten Gegendichteinrichtung 11, 12 in Schliessstellung in Dichtkontakt stehen. Wie insbesondere Fig. 4 zu entnehmen ist, sind die Dichtlippen 16 der Dichtungen 13 an der ersten und zweiten Gegendichteinrichtung einander zugewandt angeordnet. Hierdurch wird erreicht, dass die erste und zweite Dichtlinie in einer Projektion entlang der Längsachse möglichst nahe radial beieinander liegen, um das Ventil 1 gemäss der Erfindung nahezu druckausgeglichen auszugestalten. Im vorliegenden Ausführungsbeispiel beträgt das Verhältnis der ersten Fläche, die in Projektion entlang der Hülsenlängsachse L von der ersten Dichtlinie eingeschlossen ist, zu der zweiten Fläche, die in Projektion entlang der Hülsenlängsachse L von der zweiten Dichtlinie eingeschlossen ist, etwa 89/100, was ein hinreichend schnelles und präzises Schalten des Ventils zwischen Schliess- und Offenstellung erlaubt.

Ferner beträgt im vorliegend gezeigten Ausführungsbeispiel das Verhältnis aus dem kleinsten Abstand Dr der ersten Dichteinrichtung 21 zur Hülsenlängsachse L zu dem axialen Abstand Da zwischen erster und zweiter Dichteinrichtung 21, 22, d.h. das Verhältnis aus dem Radius der ersten Dichtlinie zum axialen Abstand Da, mehr als 3, 5. Hierdurch wird einerseits in der Offenstellung eine möglichst grosse Durchström-Querschnittsfläche zwischen erster bzw. zweiter Dichteinrichtung 21, 22 und erster bzw. zweiter Gegendichteinrichtung 11, 12 erzeugt und andererseits die Länge und damit die Masse des Verschlusselements 20 und folglich die Schaltzeit verringert.

Darüber hinaus weisen der Fluideinlass 18 und der Fluidauslass 19 bezüglich der Hülsenlängsachse L axial in bzw. aus dem Ventilgehäuse 10. Diese Axial-Axial-Anordnung zeichnet sich durch eine besonders strömungsgünstige Fluidführung aus. Das vorliegend gezeigte Ausführungsbeispiel stellt zudem ein besonders platzsparendes Ventil 1 dar, da die Fluidverbindung zwischen Fluideinlass 18 oder Fluidauslass 19 in vorteilhafter Weise durch das Zentrum 37 der Magnetfeldspule 33 des Reluktanzaktuators entlang der Spulenachse führt.

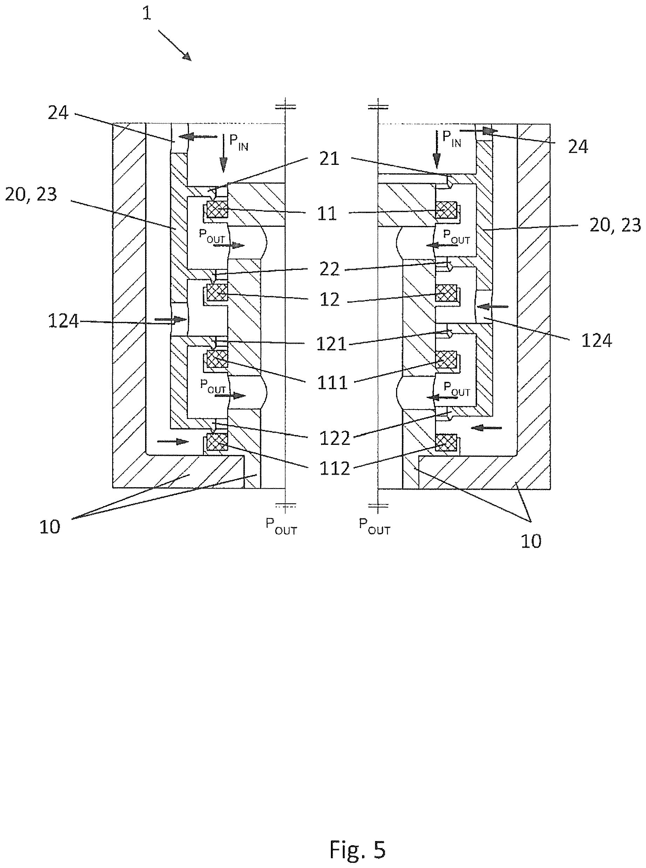

Fig. 5 zeigt einen Detailquerschnitt durch ein weiteres Ausführungsbeispiel eines erfindungsgemässen Ventils 1 in Offenstellung (rechte Teilabbildung der Fig. 5) bzw. in Schliessstellung (linke Teilabbildung der Fig. 5), das im Gegensatz zum Ausführungsbeispiel gemäss Fig. 1 bis 4 nicht nur eine, sondern zwei Doppeldichtsitze aufweist, die jeweils am Hülsenabschnitt 23 eine erste und eine dazu entlang der Hülsenlängsachse L beabstandete zweite Dichteinrichtung 21, 22 bzw. 121, 122 sowie am Ventilgehäuse 10 eine erste und eine entsprechend beabstandete zweite Gegendichteinrichtung 11, 12 bzw. 111, 112 aufweisen.

Dabei sind die jeweiligen ersten und zweiten Dichteinrichtungen 21, 22 bzw. 121, 122 sowie die jeweiligen ersten und zweiten Gegendichteinrichtungen 11, 12 bzw. 111, 112 der beiden Doppeldichtsitze analog zu der ersten und zweiten Dichteinrichtung 21, 22 und der ersten und zweiten Gegendichteinrichtung 11, 12 des Ventils 1 gemäss Fig. 1 bis 4 ausgebildet.

Um den Fluidstrom über beide Doppeldichtsitze bei geöffnetem Ventil 1 zu leiten, weist der Hülsenabschnitt 23 beim Ventil 1 gemäss Fig. 5 neben den zum Ventil 1 nach Fig. 1 bis 4 analogen Durchgangsöffnungen 24 zusätzlich zwischen der zweiten Dichteinrichtung 22 des einen Doppeldichtsitzes und der ersten Dichteinrichtung 121 des benachbarten zweiten Doppeldichtsitzes wenigstens eine umfangsseitige Durchgangsöffnung 124 auf, über die die Innenseite und die Aussenseite des Hülsenabschnitts 23 in Fluidverbindung stehen.

Insgesamt wird bei dem Ventil 1 gemäss Fig. 5 im Vergleich zum Ventil 1 gemäss Fig. 1 bis 4 durch das Vorhandensein mehrerer Doppeldichtsitze in vorteilhafter Weise die Durchström-Querschnittsfläche bei gleichem Ventilhub vergrössert.

Zudem ist das Ventil 1 gemäss Fig. 5 im Vergleich zum Ventil 1 gemäss Fig. 1 bis 4 vollständig druckausgeglichen, da jeweils die erste und zweite Dichtreinrichtung 21, 22, 121, 122 bzw. Gegendichteinrichtung 11, 12, 111, 112 beider Doppeldichtsitze deckungsgleich übereinanderliegen, so dass bezüglich beider Doppeldichtsitze das Verhältnis der jeweils ersten Fläche, die in Projektion entlang der Hülsenlängsachse L von der jeweils ersten Dichtlinie eingeschlossen ist, zu der jeweils zweiten Fläche, die in Projektion entlang der Hülsenlängsachse L von der jeweils zweiten Dichtlinie eingeschlossen ist, 1 beträgt. Gleiches wäre selbstverständlich auch für das Ventil 1 gemäss Fig. 1 bis 4 denkbar.

## Patentansprüche

1. Gaseinblasventil (1) mit einem Ventilgehäuse (10), in dem zum Öffnen und Schliessen einer Fluidverbindung zwischen einem Fluideinlass (18) und einem Fluidauslass (19) des Ventilgehäuses (10) mittels eines Aktuators (30) ein Verschlusselement (20) mit wenigstens einem Hülsenabschnitt (23) entlang seiner Hülsenlängsachse (L) verschiebbar ist, wobei der Aktuator (30) bezüglich des Ventilgehäuses (10) ortsfeste und bewegliche Teile (31, 32) aufweist und wobei zumindest die beweglichen Teile (32) des Aktuators (30) und das Verschlusselement (20) vollständig innerhalb eines von dem Ventilgehäuse (10) eingeschlossenen Fluidraums (17) zwischen Fluideinlass (18) und Fluidauslass (19) angeordnet sind,
und wobei das Ventil (1) wenigstens einen Doppeldichtsitz mit einer ersten geschlossenen Dichtlinie und einer zweiten geschlossenen Dichtlinie aufweist,
wobei die erste und die zweite geschlossene Dichtlinie bei geschlossener Fluidverbindung jeweils den Fluidraum in unmittelbar mit dem Fluideinlass und unmittelbar mit dem Fluidauslass verbundene Teilfluidräume unterteilen, so dass an den zwei Dichtlinien jeweils auf einer Seite eines entsprechenden Dichtkontakts eine unmittelbare Fluidverbindung zum Fluideinlass besteht und auf der anderen Seite des entsprechenden Dichtkontakts eine unmittelbare Fluidverbindung zum Fluidauslass besteht, **dadurch gekennzeichnet,**
**dass** der mindestens eine Doppeldichtsitz am Hülsenabschnitt (23) eine erste Dichteinrichtung (21) und eine zur ersten Dichteinrichtung (21) entlang der Hülsenlängsachse (L) beabstandete zweite Dichteinrichtung (22) aufweist,
**dass** der mindestens eine Doppeldichtsitz am Ventilgehäuse (10) eine erste Gegendichteinrichtung (11) und eine zur ersten Gegendichteinrichtung (11) entlang der Hülsenlängsachse (L) beabstandete zweite Gegendichteinrichtung (12) aufweist,
wobei zum Schliessen der Fluidverbindung die erste Dichteinrichtung (21) mit der ersten Gegendichteinrichtung (11) entlang der ersten geschlossenen Dichtlinie und die zweite Dichteinrichtung (22) mit der zweiten Gegendichteinrichtung (12) entlang der zweiten geschlossenen Dichtlinie im entsprechenden Dichtkontakt stehen,
**dass** der Abstand entlang der Hülsenlängsachse (L) zwischen der ersten und der zweiten Dichteinrichtung (21, 22) gleich gross ist wie der Abstand entlang der Hülsenlängsachse (L) zwischen der ersten und der zweiten Gegendichteinrichtung (11, 12), so dass die erste und die zweite Dichteinrichtung (21, 22) gleichzeitig mit der ersten und der zweiten Gegendichteinrichtung (11, 12) in Kontakt treten,
**dass** bezüglich des mindestens einen Doppeldichtsitzes die geöffnete Fluidverbindung zwischen Fluideinlass (18) und Fluidauslass (19) mindestens im Bereich des Abstandes zwischen der ersten Dichteinrichtung (21) und der zweiten Dichteinrichtung (22) über die Innenseite und die Aussenseite des Hülsenabschnitts (23) führt, und
**dass** bezüglich des wenigstens einen Dichtsitzpaares das Verhältnis einer ersten Fläche, die in Projektion entlang der Hülsenlängsachse (L) von der ersten Dichtlinie eingeschlossen ist, zu einer zweiten Fläche, die in Projektion entlang der Hülsenlängsachse (L) von der zweiten Dichtlinie eingeschlossen ist, zwischen 6/10 und 10/6 liegt.

2. Gaseinblasventilnach Anspruch 1, **dadurch gekennzeichnet, dass** das Ventil (1) zwei, drei, vier oder fünf Doppeldichtsitze aufweist, die jeweils am Hülsenabschnitt (23) eine erste und eine dazu entlang der Hülsenlängsachse (L) beabstandete zweite Dichteinrichtung (21, 22 bzw. 121, 122) sowie am Ventilgehäuse (10) eine erste und eine entsprechend gleich beabstandete zweite Gegendichteinrichtung (11, 12 bzw. 111, 112) aufweisen.

3. Gaseinblasventil nach Anspruch 1 oder 2, **dadurch gekennzeichnet, dass** das Verhältnis zwischen einem der nachfolgend angegebenen Bereiche liegt: 65/100 und 100/65, 7/10 und 10/7, 75/100 und 100/75, 8/10 und 10/8, 85/100 und 100/85, 9/10 und 10/9, 95/100 und 100/95.

4. Gaseinblasventil nach einem der Ansrpüche 1 bis 3, wobei das Verhältnis gleich 1 ist.

5. Gaseinblasventil nach Anspruch 1 oder 2, **dadurch gekennzeichnet, dass** das Verhältnis zwischen einem der nachfolgend angegebenen Bereiche liegt: 6/10 und 99/100, 100/99 und 10/6, 6/10 und 98/100, 100/98 und 10/6, 6/10 und 97/100, 100/97 und 10/6, 6/10 und 96/100, 100/96 und 10/6, 6/10 und 95/100, 100/95 und 10/6, 6/10 und 94/100, 100/94 und 10/6, 6/10 und 93/100, 100/93 und 10/6, 6/10 und 92/100, 100/92 und 10/6, 6/10 und 91/100, 100/91 und 10/6, 6/10 und 9/10, 10/9 und 10/6, 6/10 und 89/100, 100/89 und 10/6, 6/10 und 88/100, 100/88 und 10/6, 6/10 und 87/100, 100/87 und 10/6, 6/10 und 85/100, 100/85 und 10/6.

6. Gaseinblasventil nach einem der vorhergehenden Ansprüche, **dadurch gekennzeichnet, dass** bezüglich des wenigstens einen Doppeldichtsitzes bzw. jedes Doppeldichtsitzes das Verhältnis zwischen einerseits dem kleinsten Abstand (Dr) der ersten oder zweiten Dichteinrichtung (21) zur Hülsenlängsachse (L) und andererseits dem axialen Abstand (Da) zwischen erster und zweiter Dichteinrichtung (21, 22) wenigstens eine der nachfolgenden Grössen beträgt: 1, wenigstens 1,25, wenigstens 1,5, wenigstens 1,75, wenigstens 2, wenigstens 2,25, wenigstens 2,5, wenigstens 2,75, wenigstens 3, wenigstens 3,25, wenigstens 3,5, wenigstens 3,75, wenigstens 4, wenigstens 4,5, wenigstens 5, wenigstens 6, wenigstens 7.

7. Gaseinblasventil nach einem der vorhergehenden Ansprüche, **dadurch gekennzeichnet, dass**
• die erste und/oder zweite Dichteinrichtung (21, 22) des wenigstens einen Doppeldichtsitzes an einem umfangsseitig umlaufenden Fortsatz auf der Aussenseite des Hülsenabschnitts (23) angeordnet ist, oder
• die erste und/oder zweite Dichteinrichtung (21, 22) des wenigstens einen Dichtsitzpaares an einem umfangsseitig umlaufenden Fortsatz (25) auf der Innenseite des Hülsenabschnitts (23) angeordnet ist, oder
• eine der Dichteinrichtungen (21, 22) des wenigstens einen Doppeldichtsitzes an einem umfangsseitig umlaufenden Fortsatz (25) auf der Aussenseite oder Innenseite des Hülsenabschnitts (23) und die andere Dichteinrichtung (22, 21) des wenigstens einen Doppeldichtsitzes an einer Stirnseite des Hülsenabschnitts (23) angeordnet ist, oder
• eine der Dichteinrichtungen (21, 22) des wenigstens einen Doppeldichtsitzes an einem umfangsseitig umlaufenden Fortsatz auf der Innenseite des Hülsenabschnitts (23) und die andere Dichteinrichtung (22, 21) des wenigstens einen Doppeldichtsitzes an einem umfangsseitig umlaufenden Fortsatz auf der Aussenseite des Hülsenabschnitts (23) angeordnet ist.

8. Gaseinblasventil nach einem der vorhergehenden Ansprüche, **dadurch gekennzeichnet, dass** das Verschlusselement (20) axial angrenzend an den Hülsenabschnitt (23) einen weiteren Hülsenabschnitt (26) aufweist, der vorzugsweise wenigstens eine umfangsseitige Durchgangsöffnung (24) aufweist, über die die Innenseite und die Aussenseite des weiteren Hülsenabschnitts (26) in Fluidverbindung stehen.

9. Gaseinblasventil nach einem der Ansprüche 2 bis 8, **dadurch gekennzeichnet, dass** der Hülsenabschnitt (23) - sofern mehr als ein Doppeldichtsitz vorhanden ist - zwischen jeweils benachbarten Doppeldichtsitzen wenigstens eine umfangsseitige Durchgangsöffnung (124) aufweist, über die die Innenseite und die Aussenseite des Hülsenabschnitts (23) in Fluidverbindung stehen.

10. Gaseinblasventil nach einem der vorhergehenden Ansprüche, **dadurch gekennzeichnet, dass** der Aktuator (30)
• als elektromagnetischer Reluktanzaktuator mit einer Magnetfeldspule (33), einem magnetisch leitenden Körper (34) mit Luftspalt (35) und einem Anker (36) ausgebildet ist, oder
• als elektromagnetischer Tauchspulen-Aktuator mit einer Magnetfeldspule und einem Permanentmagneten ausgebildet ist.

11. Gaseinblasventil nach Anspruch 10, **dadurch gekennzeichnet, dass** bei einer Ausbildung als Reluktanzaktuator der Anker (36) mit dem Verschlusselement (20) verbunden ist, insbesondere mit dem Verschlusselement (20) einteilig ausgebildet ist.

12. Gaseinblasventil nach Anspruch 10 oder 11, **dadurch gekennzeichnet, dass** bei einer Ausbildung als Reluktanzaktuator die Magnetfeldspule (33) zusammen mit dem magnetisch leitenden Körper (34) und/oder der Anker (36) innerhalb des Fluidraums (17) angeordnet sind.

13. Gaseinblasventil nach Anspruch 10, **dadurch gekennzeichnet, dass** bei einer Ausbildung als Tauchspulen-Aktuator die Magnetfeldspule mit dem Verschlusselement verbunden ist, insbesondere auf einen Abschnitt des Verschlusselements aufgewickelt ist.

14. Gaseinblasventil nach Anspruch 10 oder 13, **dadurch gekennzeichnet, dass** bei einer Ausbildung als Tauchspulen-Aktuator die Magnetfeldspule und/oder der Permanentmagnet innerhalb des Fluidraums angeordnet sind.

15. Gaseinblasventil nach einem der Ansprüche 10 bis 14, **dadurch gekennzeichnet, dass** die Fluidverbindung zwischen Fluideinlass (18) oder Fluidauslass (19) entlang der Spulenachse durch das Zentrum (37) der Magnetfeldspule (33) des Reluktanzaktuators oder des Tauchspulen-Aktuators führt.

16. Gaseinblasventil nach einem der vorhergehenden Ansprüche, **dadurch gekennzeichnet, dass** die erste und/oder die zweite Dichteinrichtung (21, 22) des wenigstens einen Doppeldichtsitzes und/oder die erste und/oder die zweite Gegendichteinrichtung (11, 12) des wenigstens einen Doppeldichtsitzes eine Dichtung (13) aufweisen.

17. Gasblasventil nach Anspruch 16, wobei die Dichtung in in einer nutenartigen Vertiefung (14) angeordnet ist.

18. Gaseinblasventil nach einem der Ansprüche 16 oder 17, **dadurch gekennzeichnet, dass** die Dichtung (13) eine Dichtlippe (16) aufweist, die bevorzugt in Strömungsrichtung der Fluidverbindung zwischen Fluideinlass (18) und Fluidauslass (19) ausgerichtet ist.

19. Gaseinblasventil nach einem der Ansprüche 16 bis 18, wobei die Dichtung aus einem elastischen Material ist.

20. Gaseinblasventil nach einem der vorhergehenden Ansprüche, **dadurch gekennzeichnet, dass** das Ventil (1), vorzugsweise das Verschlusselement (20) und/oder das Ventilgehäuse (10), wenigstens einen mechanischen Endanschlag (15) zum Schutz der ersten und zweiten Dicht- und Gegendichteinrichtungen (11, 12, 21, 22) des wenigstens einen Doppeldichtsitzes aufweist, wenn diese miteinander in Dichtkontakt gelangen.

21. Gaseinblasventil nach einem der vorhergehenden Ansprüche, **dadurch gekennzeichnet, dass** der Fluideinlass (18) bezüglich der Hülsenlängsachse (L) axial oder radial in das Ventilgehäuse (10) weist und/oder dass der Fluidauslass (19) bezüglich der Hülsenlängsachse (L) axial oder radial aus dem Ventilgehäuse (10) weist.

## Claims

1. Gas injection valve (1) having a valve housing (10) in which, for the purpose of opening and closing a fluid connection between a fluid inlet (18) and a fluid outlet (19) of the valve housing (10), a closure element (20) having at least one sleeve section (23) can be moved along its sleeve longitudinal axis (L) by means of an actuator (30), wherein the actuator (30) has parts (31, 32) that are respectively stationary and movable with respect to the valve housing (10) and at least the movable parts (32) of the actuator (30) and the closure element (20) are arranged entirely within a fluid space (17), enclosed by the valve housing (10), between the fluid inlet (18) and the fluid outlet (19), and wherein the valve (1) has at least one double-seal seat with a first closed sealing line and a second closed sealing line, wherein, with closed fluid connection, the first and the second closed sealing line divide the fluid space respectively into partial fluid spaces, connected directly with the fluid inlet and directly with the fluid outlet, so that at both sealing lines respectively on one side of a corresponding sealing contact a direct fluid connection exists to the fluid inlet and the other side of the corresponding sealing contact a direct fluid connection exists to the fluid outlet,
**characterized in**
**that** the at least one double-seal seat has on the sleeve section (23) a first seal device (21) and a second seal device (22), spaced apart from the first seal device (21) along the sleeve longitudinal axis (L),
**that** the at least one double-seal seat comprises on the valve housing (10) a first counter-seal device (11) and a second counter-seal device (12), spaced apart from the first counter-seal device (11) along the sleeve longitudinal axis (L),
wherein in order to close the fluid connection the first seal device (21) is in sealing contact with the first counter-seal device (11) along the first closed sealing line and the second seal device (22) is in sealing contact with the second counter-seal device (12) along the second closed sealing line respectively,
**that** the distance along the sleeve longitudinal axis (L) between the first and the second seal device (21, 22) is equal to the distance between the first and the second counter-seal device (11, 12), so that the first and the second seal device (21, 22) come in contact simultaneously with the first and the second counter-seal device (11, 22),
**that** with respect to the at least one double-seal seat the opened fluid connection between fluid inlet (18) and fluid outlet (19) at least in the region between the first seal device (21) and the second seal device (22) goes via the inner side and the outer side of the sleeve section (23) and
**that** with regard to the at least one seal seat pair, the ratio between a first area enclosed by the first sealing line in projection along the sleeve longitudinal axis (L) and a second area enclosed by the second sealing line in projection along the sleeve longitudinal axis (L) is between 6/10 and 10/6.

2. Gas injection valve according to Claim 1, **characterized in that** the valve (1) has two, three, four or five double-seal seats, which respectively have on the sleeve section (23) a first and a second seal device (21, 22 or respectively 121, 122) spaced apart therefrom along the sleeve longitudinal axis (L), and on the valve housing (10) a first and an accordingly spaced apart second counter-seal device (11, 12 or respectively 111, 112).

3. Gas injection valve according to Claim 1 or 2, **characterized in that** the ratio is between one of the following mentioned ranges: 65/100 and 100/65, 7/10 and 10/7, 75/100 and 100/75, 8/10 and 10/8, 85/100 and 100/85, 9/10 and 10/9, 95/100 and 100/95.

4. Gas injection valve according to one of claims 1 to 3, wherein the ratio is equal to 1.

5. Gas injection valve according to Claim 1 or 2, **characterized in that** the ratio lies between one of the following mentioned ranges: 6/10 and 99/100, 100/99 and 10/6, 6/10 and 98/100, 100/98 and 10/6, 6/10 and 97/100, 100/97 and 10/6, 6/10 and 96/100, 100/96 and 10/6, 6/10 and 95/100, 100/95 and 10/6, 6/10 and 94/100, 100/94 and 10/6, 6/10 and 93/100, 100/93 and 10/6, 6/10 and 92/100, 100/92 and 10/6, 6/10 and 91/100, 100/91 and 10/6, 6/10 and 9/10, 10/9 and 10/6, 6/10 and 89/100, 100/89 and 10/6, 6/10 and 88/100, 100/88 and 10/6, 6/10 and 87/100, 100/87 and 10/6, 6/10 and 85/100, 100/85 and 10/6.

6. Gas injection valve according to one of the preceding claims, **characterized in that** with respect to the at least one double-seal seat or respectively with respect to each double-seal seat, the ratio between on the one hand the smallest distance (Dr) of the first or second seal device (21) to the sleeve longitudinal axis (L) and on the other hand to the axial distance (Da) between first and second seal device (21, 22) is at least one of the following quantity: 1, at least 1.25, at least 1.5, at least 1.75, at least 2, at least 2.25, at least 2.5, at least 2.75, at least 3, at least 3.25, at least 3.5, at least 3.75, at least 4, at least 4.5, at least 5, at least 6, at least 7.

7. Gas injection valve according to one of the preceding claims, **characterized in that**
• the first and/or second seal device (21, 22) of the at least one double seal seat is arranged on a circumferential extension on the circumferential side, on the outer side of the sleeve section (23), or
• the first and/or second seal device (21, 22) of the at least one seal seat pair is arranged on a circumferential extension (25) on the circumferential side, on the inner side of the sleeve section (23), or
• one of the seal devices (21, 22) of the at least one double seal seat is arranged on a circumferential extension (25) on the circumferential side, on the outer side or inner side of the sleeve section (23), and the other seal device (22, 21) of the at least one double seal seat is arranged on a face side of the sleeve section (23), or
• one of the seal devices (21, 22) of the at least one double seal seat is arranged on a circumferential extension on the circumferential side, on the inner side of the sleeve section (23), and the other seal device (22, 21) of the at least one double seal seat is arranged on a circumferential extension on the circumferential side, on the outer side of the sleeve section (23).

8. Gas injection valve according to one of the preceding claims, **characterized in that** the closure element (20) has a further sleeve section (26) axially adjoining the sleeve section (23), which further sleeve section preferably has at least one circumferential through-opening (24), via which the inner side and the outer side of the further sleeve section (26) are in fluid connection.

9. Gas injection valve according to one of Claims 2 to 8, **characterized in that** the sleeve section (23) - in so far as more than one double-seal seat is present - has between respectively adjacent double-seal seats at least one circumferential through-opening (124), via which the inner side and the outer side of the sleeve section (23) are in fluid connection.

10. Gas injection valve according to one of the preceding claims, **characterized in that** the actuator (30)
• is constructed as an electromagnetic reluctance actuator with a magnetic field coil (33), with a magnetically conductive body (34) with air gap (35) and with an armature (36), or
• is constructed as an electromagnetic plunger coil actuator with a magnetic field coil and with a permanent magnet.

11. Gas injection valve according to Claim 10, **characterized in that** with a construction as reluctance actuator, the armature (36) is connected to the closure element (20), in particular is constructed in one piece with the closure element (20).

12. Gas injection valve according to Claim 10 or 11, **characterized in that** with a construction as reluctance actuator, the magnetic field coil (33) together with the magnetically conductive body (34) and/or the armature (36) are arranged within the fluid space (17).

13. Gas injection valve according to Claim 10, **characterized in that** with a construction as plunger coil actuator, the magnetic field coil is connected to the closure element, in particular is wound onto a section of the closure element.

14. Gas injection valve according to Claim 10 or 13, **characterized in that** with a construction as plunger coil actuator, the magnetic field coil and/or the permanent magnet are arranged within the fluid space.

15. Gas injection valve according to one of Claims 10 to 14, **characterized in that** the fluid connection between fluid inlet (18) or fluid outlet (19) along the coil axis goes through the centre (37) of the magnetic field coil (33) of the reluctance actuator or of the plunger coil actuator.

16. Gas injection valve according to one of the preceding claims, **characterized in that** the first and/or the second seal device (21, 22) of the at least one double-seal seat and/or the first and/or the second counter-seal device (11, 12) of the at least one double-seal seat have a seal (13).

17. Gas injection valve according to Claim 16, wherein the seal is arranged in a groove-like depression (14).

18. Gas injection valve according to one of Claims 16 or 17, **characterized in that** the seal (13) has a sealing lip (16), which is preferably aligned in flow direction of the fluid connection between fluid inlet (18) and fluid outlet (19).

19. Gas injection valve according to one of claims 16 to 18, wherein the seal is made of a flexible material.

20. Gas injection valve according to one of the preceding claims, **characterized in that** the valve (1), preferably the closure element (20) and/or the valve housing (10), has at least one mechanical end stop (15) for protection of the first and second seal- and counter-seal devices (11, 12, 21, 22) of the at least one double-seal seat, when these come in sealing contact with one another.

21. Gas injection valve according to one of the preceding claims, **characterized in that** the fluid inlet (18) with respect to the sleeve longitudinal axis (L) points axially or radially into the valve housing (10) and/or that the fluid outlet (19) with respect to the sleeve longitudinal axis (L) points axially or radially out from the valve housing (10).

## Revendications

1. Vanne d'injection de gaz (1) comprenant un boîtier de vanne (10) dans lequel un élément de fermeture (20) pourvu d'au moins une portion de manchon (23) peut être déplacé le long de son axe longitudinal de manchon (L) au moyen d'un actionneur (30) pour ouvrir et fermer une liaison fluidique entre une entrée de fluide (18) et une sortie de fluide (19) du boîtier de vanne (10),
l'actionneur (30) comportant des parties (31, 32) fixes et mobiles par rapport au boîtier de vanne (10) et au moins les parties mobiles (32) de l'actionneur (30) et l'élément de fermeture (20) étant disposés complètement à l'intérieur d'un espace de fluide (17) contenu dans le boîtier de vanne (10) et situé entre l'entrée de fluide (18) et la sortie de fluide (19),
et la vanne (1) comportant au moins un double siège d'étanchéité pourvu d'une première ligne d'étanchéité fermée et d'une deuxième ligne d'étanchéité fermée,
la première et la deuxième ligne d'étanchéité divisant chacune, lorsque la liaison fluidique est fermée, l'espace de fluide en sous-espaces de fluide reliés directement à l'entrée de fluide et directement à la sortie de fluide de sorte que, sur les deux lignes d'étanchéité, de chaque côté d'un contact d'étanchéité correspondant, une liaison fluidique directe soit établie avec l'entrée de fluide et, de l'autre côté du contact d'étanchéité correspondant, une liaison fluidique directe soit établie avec la sortie de fluide,
**caractérisée en ce que**
l'au moins un double siège d'étanchéité comporte au niveau de la portion de manchon (23) un premier dispositif d'étanchéité (21) et un deuxième dispositif d'étanchéité (22) espacés du premier dispositif d'étanchéité (21) le long de l'axe longitudinal de manchon (L),
l'au moins un double siège d'étanchéité comporte au niveau du boîtier de vanne (10) un premier dispositif homologue (11) et un deuxième dispositif d'étanchéité homologue (12) espacé du premier dispositif d'étanchéité homologue (11) le long de l'axe longitudinal de manchon (L),
pour fermer la liaison fluidique, le premier dispositif d'étanchéité (21) étant en contact d'étanchéité correspondant avec le premier dispositif d'étanchéité homologue (11) le long de la première ligne d'étanchéité fermée et le deuxième dispositif d'étanchéité (22) étant en contact d'étanchéité correspondant avec le deuxième dispositif d'étanchéité homologue (12) le long de la deuxième ligne d'étanchéité fermée,
la distance le long de l'axe longitudinal de manchon (L) entre le premier et le deuxième dispositif d'étanchéité (21, 22) étant égale à la distance le long de l'axe longitudinal de manchon (L) entre le premier et le deuxième dispositif d'étanchéité homologue (11, 12) de sorte que le premier et le deuxième dispositif d'étanchéité (21, 22) viennent en contact simultanément avec le premier et le deuxième dispositif d'étanchéité homologue (11, 12),
en ce qui concerne l'au moins un double siège d'étanchéité, la liaison fluidique ouverte entre l'entrée de fluide (18) et la sortie de fluide (19) passant, au moins dans la zone de la distance entre le premier dispositif d'étanchéité (21) et le deuxième dispositif d'étanchéité (22), par le côté intérieur et le côté extérieur de la portion de manchon (23), et
en ce qui concerne l'au moins une paire de sièges d'étanchéité, le rapport d'une première surface, qui est entourée par la première ligne d'étanchéité en projection le long de l'axe longitudinal de manchon (L), à une deuxième surface, qui est entourée par la deuxième ligne d'étanchéité en projection suivant l'axe longitudinal de manchon (L), étant compris entre 6/10 et 10/6.

2. Vanne d'injection de gaz selon la revendication 1, **caractérisée en ce que** la vanne (1) comporte deux, trois, quatre ou cinq doubles sièges d'étanchéité, qui comportent chacun au niveau de la portion de manchon (23) un premier et un deuxième dispositif d'étanchéité (21, 22 ou 121, 122), le deuxième étant espacé du premier le long de l'axe longitudinal de manchon (L), et au niveau du boîtier de vanne (10) un premier et un deuxième dispositif d'étanchéité homologues (11, 12 ou 111, 112), également espacés l'un de l'autre de manière correspondante.

3. Vanne d'injection de gaz selon la revendication 1 ou 2, **caractérisée en ce que** le rapport est situé dans l'une des plages suivantes : 65/100 et 100/65, 7/10 et 10/7, 75/100 et 100/75, 8/10 et 10/8, 85/100 et 100/85, 9/10 et 10/9, 95/100 et 100/95.

4. Vanne d'injection de gaz selon l'une des revendications 1 à 3, le rapport étant égal à 1.

5. Vanne d'injection de gaz selon la revendication 1 ou 2, **caractérisée en ce que** le rapport est compris dans l'une des plages suivantes : 6/10 et 99/100, 100/99 et 10/6, 6/10 et 98/100, 100/98 et 10/6, 6/10 et 97/100, 100/97 et 10/6, 6/10 et 96/100, 100/96 et 10/6, 6/10 et 95/100, 100/95 et 10/6, 6/10 et 94/100, 100/94 et 10/6, 6/10 et 93/100, 100/93 et 10/6, 6/10 et 92/100, 100/92 et 10/6, 6/10 et 91/100, 100/91 et 10/6, 6/10 et 9/10, 10/9 et 10/6, 6/10 et 89/100, 100/89 et 10/6, 6/10 et 88/100, 100/88 et 10/6, 6/10 et 87/100, 100/87 et 10/6, 6/10 et 85/100, 100/85 et 10/6.

6. Vanne d'injection de gaz selon l'une des revendications précédentes, **caractérisée en ce que**, en ce qui concerne l'au moins un double siège d'étanchéité ou chaque double siège d'étanchéité, le rapport entre d'une part la plus petite distance (Dr) du premier ou du deuxième dispositif d'étanchéité (21) à l'axe longitudinal de manchon (L) et d'autre part la distance axiale (Da) entre le premier et le deuxième dispositif d'étanchéité (21, 22) est au moins une des grandeurs suivantes : 1, au moins 1,25, au moins 1,5, au moins 1,75, au moins 2, au moins 2,25, au moins 2,5, au moins 2,75, au moins 3, au moins 3,25, au moins 3,5, au moins 3,75, au moins 4, au moins 4,5, au moins 5, au moins 6, au moins 7.

7. Vanne d'injection de gaz selon l'une des revendications précédentes, **caractérisée en ce que**
• le premier et/ou le deuxième dispositif d'étanchéité (21, 22) de l'au moins un double siège d'étanchéité est disposé au niveau d'une extension périphérique du côté extérieur de la portion de manchon (23), ou
• le premier et/ou le deuxième dispositif d'étanchéité (21, 22) de l'au moins une paire de sièges d'étanchéité est disposé au niveau d'une extension périphérique (25) du côté intérieur de la portion de manchon (23), ou
• l'un des dispositifs d'étanchéité (21, 22) de l'au moins un double siège d'étanchéité est disposé au niveau d'une extension périphérique (25) du côté extérieur ou du côté intérieur de la portion de manchon (23) et l'autre dispositif d'étanchéité (22, 21) de l'au moins un double siège d'étanchéité est disposé au niveau d'un côté frontal de la portion de manchon (23), ou
• l'un des dispositifs d'étanchéité (21, 22) de l'au moins un double siège d'étanchéité est disposé au niveau d'une extension périphérique du côté intérieur de la portion de manchon (23) et l'autre dispositif d'étanchéité (22, 21) de l'au moins un double siège d'étanchéité est disposé au niveau d'une extension périphérique du côté extérieur de la portion de manchon (23).

8. Vanne d'injection de gaz selon l'une des revendications précédentes, **caractérisée en ce que** l'élément de fermeture (20) comporte de manière axialement adjacente à la portion de manchon (23) une autre portion de manchon (26) qui comporte de préférence au moins une ouverture traversante périphérique (24) par laquelle le côté intérieur et le côté extérieur de l'autre portion de manchon (26) sont en liaison fluidique.

9. Vanne d'injection de gaz selon l'une des revendications 2 à 8, **caractérisée en ce que**, dans le cas où il y a plus d'un double siège d'étanchéité, la portion de manchon (23) comporte entre des doubles sièges d'étanchéité respectivement adjacents au moins une ouverture traversante périphérique (124) par laquelle le côté intérieur et le côté extérieur de la portion de manchon (23) sont en liaison fluidique.

10. Vanne d'injection de gaz selon l'une des revendications précédentes, **caractérisée en ce que** l'actionneur (30)
• est conçu comme un actionneur à réluctance électromagnétique comportant une bobine à champ magnétique (33), un corps magnétiquement conducteur (34) pourvu d'un entrefer (35) et un induit (36), ou
• est conçu comme un actionneur électromagnétique à bobine mobile comprenant une bobine à champ magnétique et un aimant permanent.

11. Vanne d'injection de gaz selon la revendication 10, **caractérisée en ce que**, lorsqu'elle est conçue comme un actionneur à réluctance, l'induit (36) est relié à l'élément de fermeture (20), notamment est formé d'une seule pièce avec l'élément de fermeture (20).

12. Vanne d'injection de gaz selon la revendication 10 ou 11, **caractérisée en ce que**, lorsqu'elle est conçue comme un actionneur à réluctance, la bobine à champ magnétique (33) est disposée conjointement avec le corps magnétiquement conducteur (34) et/ou l'induit (36) à l'intérieur de l'espace de fluide (17).

13. Vanne d'injection de gaz selon la revendication 10, **caractérisée en ce que**, lorsqu'elle est conçue comme un actionneur à bobine mobile, la bobine à champ magnétique est reliée à l'élément de fermeture, notamment est enroulée sur une portion de l'élément de fermeture.

14. Vanne d'injection de gaz selon la revendication 10 ou 13, **caractérisée en ce que**, lorsqu'elle est conçue comme un actionneur à bobine mobile, la bobine à champ magnétique et/ou l'aimant permanent sont disposés à l'intérieur de l'espace de fluide.

15. Vanne d'injection de gaz selon l'une des revendications 10 à 14, **caractérisée en ce que** la liaison fluidique entre l'entrée de fluide (18) ou la sortie de fluide (19) passe le long de l'axe de la bobine par le centre (37) de la bobine à champ magnétique (33) de l'actionneur à réluctance ou de l'actionneur à bobine mobile.

16. Vanne d'injection de gaz selon l'une des revendications précédentes, **caractérisée en ce que** le premier et/ou le deuxième dispositif d'étanchéité (21, 22) de l'au moins un double siège d'étanchéité et/ou du premier et/ou du deuxième dispositif d'étanchéité homologue (11, 12) de l'au moins un double siège d'étanchéité comportent une garniture d'étanchéité (13).

17. Vanne d'injection de gaz selon la revendication 16, la garniture d'étanchéité étant disposée dans une dépression (14) en forme de rainure.

18. Vanne d'injection de gaz selon l'une des revendications 16 et 17, **caractérisée en ce que** la garniture d'étanchéité (13) comporte une lèvre d'étanchéité (16) qui est orientée de préférence dans le sens d'écoulement de la liaison fluidique entre l'entrée de fluide (18) et la sortie de fluide (19).

19. Vanne d'injection de gaz selon l'une des revendications 16 à 18, la garniture d'étanchéité étant en matériau élastique.

20. Vanne d'injection de gaz selon l'une des revendications précédentes, **caractérisée en ce que** la vanne (1), de préférence l'élément de fermeture (20) et/ou le boîtier de vanne (10), comporte au moins une butée mécanique (15) destinée à protéger les premier et deuxième dispositifs d'étanchéité et dispositifs d'étanchéité homologues (11, 12, 21, 22) de l'au moins un double siège d'étanchéité lorsqu'ils entrent en contact d'étanchéité l'un avec l'autre.

21. Vanne d'injection de gaz selon l'une des revendications précédentes, **caractérisée en ce que** l'entrée de fluide (18) est dirigée, par rapport à l'axe longitudinal de manchon (L), axialement ou radialement vers l'intérieur du boîtier de vanne (10) et/ou **en ce que** la sortie de fluide (19) est dirigée, par rapport à l'axe longitudinal de manchon (L), axialement ou radialement vers l'extérieur du boîtier de vanne (10).
